# EUROPEAN PATENT SPECIFICATION

(11) **EP 1 814 118 B1**
(45) Date of publication and mention of the grant of the patent: **31.03.2010**
(21) Application number: 07100871.8
(22) Date of filing: 22.01.2007
(51) Int. Cl.: G11B 33/04

(54) **Injection molded case for optical storage discs**
Spritzgussbehälter für optische Speicherplatten
Boîtier moulé par injection pour disques optiques de stockage

(30) Priority: 20.01.2006 US 760873 P; 27.04.2006 US 795504 P; 02.05.2006 US 797107 P
(43) Date of publication of application: 01.08.2007
(73) Proprietor: Encore Holdings Limited, Nassau (BS)
(72) Inventor: Dunford, Bryan P., Provo, UT 86404 (US); Osborn, Warren R., Provo, UT 86404 (US)
(74) Representative: Vogel, Andreas

(56) References cited:
- EP-A1- 1 083 569
- WO-A-02/39451
- WO-A-2004/001759
- WO-A-2004/063022
- FR-A- 2 859 189
- US-A1- 2003 075 463
- US-A1- 2003 111 367
- US-A1- 2003 196 916
- US-A1- 2005 230 274

## Description

### FIELD OF THE INVENTION

This invention relates to cases for optical storage discs such as compact discs and digital video discs and, more particularly, to injection molded cases with a title band and off-center disk mounting hub.

### BACKGROUND OF THE INVENTION

Cases for storing optical storage discs, such as compact discs (CDs) and video compact discs (VCDs) and digital video discs (DVDs), when not being used, have been manufactured for over two decades. The typical case is a square-cornered box having a center hub for receiving the central mounting aperture of the disk. There are significant differences between so-called "jewel cases" used to store CDs and the taller cases used to store DVDs. The first significant difference is that conventional jewel cases are typically injection molded from polystyrene plastic. As the use of this material precludes the use of a "live" hinge, the cases covers are formed in two pieces-a front cover and a back cover-that use snap-together hinges. A third piece, which is internal to the case, snaps into the back cover and holds the back information sheet in place. The second significant difference is that the mechanism used to hold CDs is generally a spring plastic assembly that requires that CDs be pried therefrom. DVD cases, on the other hand, are typically injection molded as a single piece from polyolefins, such as polyethylene and polypropylene, and rely on live hinges to interconnect a front cover, a spine and a back cover. In addition, as DVDs are considered to be more fragile than CDs, DVD case specifications require a disc retaining mechanism (usually called a hub) having a push-button release. Although some CD cases have been injection molded from polyolefins such as polyethylene and polypropylene and have used disc attachment mechanisms that do not require the CD to be pried therefrom, they constituted a tiny minority of CD cases in use.

US. Pat. No. D459,935 discloses atypical injection-molded DVD case. It has a spine connected to both a front cover and a back cover via live hinges. Live hinges are ultra-thin and, hence, ultra-flexible strips of polyolefin material formed between spine and covers during the injection molding process. The case of this patent, like nearly all of those produced by the DVD packaging industry, is a shallow, medially split rectangular box with filleted edges and corners. A serious problem associated with the designs of current DVD cases is that the video disc stored within the case can be stolen without fully opening the case. Although most DVD cases have a disposable AM or RF security label adhesively attached to the inside of the case, shoplifters have learned how to pop the disc from the hub by squeezing the case, pry the case open along a single edge, and then shake the disc out of the case. The shoplifter walks out of the store with the disc, leaving the case and the security label behind,

Recently, high-definition optical discs which are read by laser diodes operating in the blue range of the electromagnetic spectrum have been introduced. Such optical discs are capable of storing far more data because blue lasers have a shorter wavelength than previously used lasers and, hence, result in a larger data storage capacity on a disc of same size which may now contains a movie in greater resolution. Currently there are two main competing formats for such high-definition optical discs: "HD DVD" and "Blu-ray Disc." Marketing experts in the motion pictures distribution industry want to provide packaging that is uniquely identifies the "HD DVD" or the "Blu-ray Disc."

WO2004/001759 A1, WO02/39451 A2, US 2003/0111367 A1, US 2003/0196916 A1, US 2003/0075463 A1 disclose measures to prohibit theft of optical storage discs out of a case. In the WO2004/001759 A1, WO02/39451 A2, US 2003/0111367 A1 theft is prevented by adding additional security elements which are not integrally formed with the case. In the

WO2004/001759 A1 and in the US 2003/0111367 A1 loops or hooks of a front cover and loops of a back cover are disposed in a line parallel to a closure rimwall and an essentially rod-shaped security element is placed in the loops while the case is closed. WO02/39451 A2 discloses an additional security element with two arms, one arm in connection with the front cover and one arm in connection with a hub located on the back cover, so as to keep the case closed. This security element is inserted perpendicular to the closure rimwall.

Other methods of preventing thefts are disclosed in US 2003/0196916 A1 and US 2003/0075463 A1. US 2003/0196916 A1 discloses a case that is at least partially clear and a hole in a printed paper inside a sleeve which enables a store employee to prove whether there is an optical storage disc in the case. In US 2003/0075463 A1 a theft should be inhibited by providing the case with concave formed rimwalls and with tabs which engage with the optical storage disc while the case is closed and which thereby prohibit the optical storage disc from falling off. Furthermore latches are provided.

Similar tabs like in US 2003/0075463 A1 are provided in EP 1 083 569 A1. These tabs should prohibit a movement and thereby a damage of the optical storage disc.

The object of WO 2004/063022 A2 and US 2005/0230274 A1 is to provide the case with product information. In WO 2004/063022 A2 a sleeve enveloping the outside of the case is printed with product information. In US 2005/0230274 A1 a piece of a back cover is raised while there is an equally formed clearance in the front cover fitting with the raised piece. Thereby product information on the raised piece can be read by a consumer while the case is opened and closed.

It has become common to package two optical discs in a single case, with the first optical disc containing the motion picture, and the second containing commentary, scenes deleted from the release version of the motion picture, interviews with the actors, special related features, and so forth. There are also other reasons for a case to store two or more discs, such as, saving space, offering convenience to retrieve movie titles belonging to the same series, etc.

What is needed is a new injection molded double-DVD case that has a new, more modem and aesthetically appealing appearance and provides a conveniently place for a title band, that can be used with existing equipment at optical disc replication and packaging companies, and that includes additional security features that hamper removal of a packaged optical disc from its case before it can be sold.

### SUMMARY OF THE INVENTION

One object of at least one embodiment the present invention is to provide a one-piece, injection molded optical disc case that has a more aesthetically appealing appearance with rounded rimwalls. Another object of at least one embodiment of the present invention is to provide a one-piece, injection molded optical case that offers a convenient place to accommodate a title band for displaying indicia of the disc format or other information pertaining to the disc it contains. The optical disc case of the present invention includes security features that hamper removal of a packaged optical disc from its case before by shoplifters.

In one particular embodiment of the present invention, the optical disc case, when in a closed configuration, has generally semi-cylindrical rimwalls, comprising upper and lower rimwalls, a spine rimwall, and a closure rimwall, which intersect in generally quarter-spherical corners. The generally semi-cylindrical rimwalls can be flattened slightly to prevent multiple closed cases that are being pushed down an assembly line from climbing over one another. The first live hinge at a first quarter position along the spine rimwall, and the second live hinge at a third quarter position along the spine rimwall to permit the front cover, the back cover and the spine lying in a common plane when in an open configuration. In other words, the front cover incorporates about one-fourth of the spine rimwall, the spine incorporates about one-half of the spine rimwall, and the back cover incorporates the remaining about one-fourth of the spine rimwall. This configuration has an added advantage in that, when the case is open, it occupies less table space than does a case having the same thickness and a flat spine that is perpendicular to the front and back covers when the case is closed.

In another embodiment of the present invention, the optical disc case has an off-center disk mounting hub which is advantageous in two respects. First, the polypropylene sleeve (or PP sleeve) which surrounds and covers major portions of spine and front and rear covers and in which is inserted a printed paper title and credits page, has been set back from the upper edge of the case an amount sufficient to leave a band on which indicia such as "HD DVD" or "Blu-ray Disc" can be printed on the front cover. Second, for the off-center disk mounting hub and platform can conveniently provide space inside the case, either above or below the disk mounting platform for an Electronic Article Surveillance (EAS) tag, without encroaching on the title band at the top of the case.

The case may is fabricated from a colored transparent polyolefin material such as polypropylene or polyethylene. For most applications, polypropylene is considered the preferred material, as live hinges made of polypropylene can be flexed a much greater number of times than can be live hinges made of polyethylene.

In another embodiment, the optical disc case optionally stores a pair of optical discs in a parallel, axially-aligned relationship. One of the problems associated with the storage of two discs on axially aligned hubs is that if the case is compressed in the hub region, the hub release mechanism on each hub will be activated and each hub will release the optical disc that is installed thereon. This problem can be solved by reducing the number of hub release fingers from six to three and then rotating one of the hubs so that the hub fingers of one hub are offset from the hub fingers of the other hub. In addition, the release button on each hub has been recessed so that they cannot push against one another even when the case is compressed. A printed insert may also be stored in the case between the two optical discs, insert support rails are provided on the inside of the front cover. The support rails and the disk mounting hub located on the inner surface of the front cover cooperate to elevate the printed insert above the upper surface of the optical disc that is stored on the hub that is integrated into the front cover. Because the disk mounting hub and platform structure on each cover is offset from the cover centers, the lower support rail is partially incorporated in the front cover disk mounting platform.

In another embodiment, the optical disc case also incorporates anti-theft features. The spine incorporates a tab that rotates down over the outer edge of the stored disc when the cover is in a closed state. Likewise, the front cover has a bracket of L-shaped cross section that locks over the opposite outer edge of the stored disc when the front cover is closed. Inner guide walls on the inside front cover have two functions: firstly, to guide the placement of the booklet that will be installed within the case so that it does not encroach on the band at the top of the case and, secondly, to make it more difficult to shake a disc out of the top or bottom ends of the case that have been partially opened by bowing the front and back covers of the case. The guide walls make it necessary to bow the case considerably more than would be necessary for a case without such guide walls.

In another embodiment, the optical disc case incorporates a pair of projections which extend vertically from the rear cover vertical near the closure edge, further making it difficult to slide a disc out of the closure side of the case when it is opened just a crack. As an additional security feature, the case can be equipped with at least one, preferably two, security latches that lock the front and back covers together along their closure edges, and can be taped over to slow down shoplifters, thereby making it more difficult to open the case, especially when wrapped in a heat-sealed sheet of transparent display wrap. The latches do not detract from the aesthetic quality of the case, as they conform to the shape of the case when closed and locked.

The various features of novelty which characterize the invention are pointed out with particularity in the claims annexed to and forming a part of this disclosure. For a better understanding of the invention, its operating advantages, and specific objects attained by its use, reference should be made to the drawings and the following description in which there are illustrated and described preferred embodiments of the invention.

### BRIEF DESCRIPTION OF DRAWINGS

FIG. 1 is a plan view of the inner major surfaces of the injection molded optical disc case in a full open configuration;
FIG. 2 is a plan view of the closed and latched injection molded optical disc case, showing primarily the outer surface of the front cover;
FIG. 3 is a close-up view of the open hinge within circle 3 of FIG. 1;
FIG. 4 is a cross-sectional view of the open hinge of FIG. 3, taken through section line 4 - 4 of FIG. 3;
FIG. 5 is a close-up view of the closed hinge within circle 5 of FIG. 2;
FIG. 6 is a cross-sectional view of the closed hinge of FIG. 5, taken through section line 6 - 6 of FIG. 5;
FIG. 7 is a plan view of the top or bottom of the injection molded optical disc case in a fully closed and latched configuration;
FIG. 8 is an elevational view of the spine of the injection molded optical disc case in a fully closed and latched configuration;
FIG. 9 is an elevational view of the fully open injection molded optical disc case, as seen from the bottom edge thereof; and
FIG. 10 is a cross-sectional view of the fully open injection molded optical disc case, taken through section line 10 - 10 of FIG. 1.

### DETAILED DESCRIPTION OF PARTICULAR EMBODIMENTS

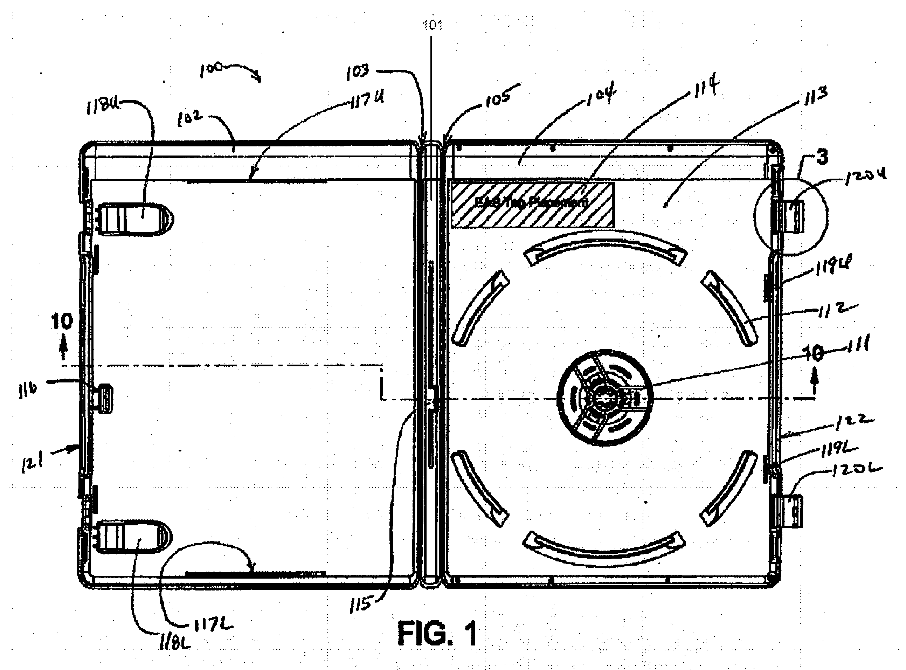

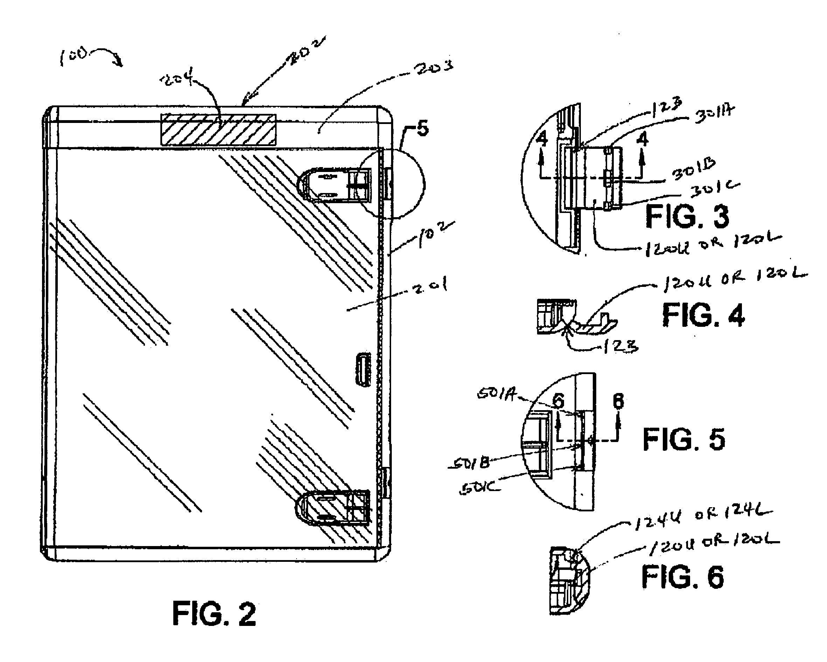

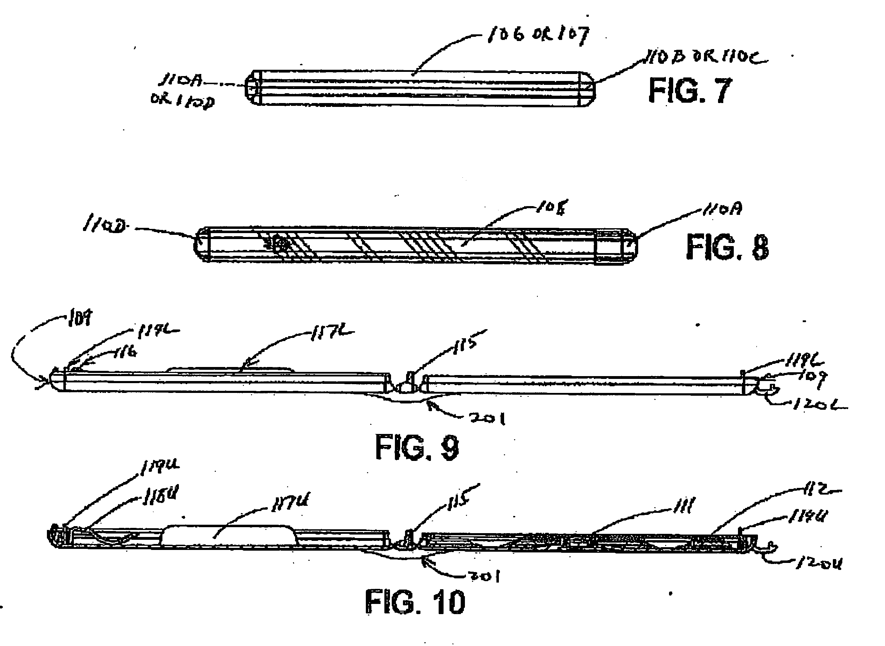

Referring now to a particular embodiment shown in FIG. 1, a new injection-molded optical disc case 100 has a more modem, aesthetically appealing appearance, and can be used with existing packaging equipment at optical disc packaging facilities. As with conventional DVD cases, the new optical disc case 100 includes a spine 101, a front cover 102 coupled to the spine 101 via a first live hinge 103, and a back cover 104 coupled to the spine 101 via a second live hinge 105. The new DVD 100 case differs from conventional optical disc cases in that, when in a closed configuration, it forms generally semi cylindrical rimwalls, including an upper rimwall 106, a lower rimwall 107, a spine rimwall 108 (FIG. 8), and a closure rimwall 109 (FIG. 9), which intersect in generally quarter-spherical corners 110A, 110B, 110C and 110D (FIG. 7 and FIG. 8), which may comprise some small flattened areas. FIGs. 7-10 also show an optional feature: a flattened band is running along a center portion of said semi-cylindrical rimwalls 106, 107, 108 and 109 to prevent multiple closed cases that are being pushed down an assembly line from climbing over one another. For the front cover 102, the back cover 104 and the spine 101 to lie in a common plane when in an open configuration, it was found suitable to position the first live hinge 103 at approximately a first quarter position along the spine rimwall 108, and the second live hinge 105 at approximately a third quarter position along the spine rimwall 108. In other words, the front cover 102 incorporates about one-fourth of the spine rimwall 108, the spine 101 incorporates about one-half of the spine rimwall 108, and the back 104 cover incorporates the remaining about one fourth of the spine rimwall 108. This configuration has an added advantage in that, when the case is open, it occupies slightly less table space than does a case having the same thickness and a flat spine that is perpendicular to the front and back covers when the case is closed. Also shown in FIG. 1, the new optical disc case 100 has an off center disk mounting hub 111 and platform 112 for two reasons. The PP sleeve 201, shown in FIG. 2, which surrounds and covers major portions of the spine 101, the front cover 102, and the rear cover 104, and in which is inserted a printed paper title and credits page (not shown), has been set back from the upper edge 202 of the case 100 an amount sufficient to leave a transparent title band 203 on which the title "HD DVD," "Blu-ray Disc" or other logo can be printed in an outside rectangular area 204 on the front cover 102. The title band 203 has a height within a range between 0.8 to 2.5 centimeters. The sleeve 201 is translucent or transparent. Of course, in practice, the logo may be printed or shown in any place within the title band 203 as desired. The case of the present invention may be fabricated from a colored transparent polyolefin material such as polypropylene or polyethylene. For most applications, polypropylene is considered the preferred material, as live hinges made of polypropylene can be flexed a much greater number of times than can be live hinges made of polyethylene. With the disk mounting hub 111 being positioned off-center comes with another advantage: it provides space 113 on the inner surface of the back cover above (as shown in FIG. 1) the disk mounting platform 112 for the mounting of an Electronic Article Surveillance (EAS) tag, without encroaching on the transparent title band 203 at the top of the case 100. In this case, the EAS tag is shown mounted in the inside rectangular area 114.

Not only is the new optical disc 100 case unique in having the title band and more aesthetically pleasing than prior art designs, it also features enhanced structural rigidity and requires slightly less polyolefin material for its manufacture.

This particular optical disc case also incorporates significant anti-theft features. The spine 101 incorporates a tab 115 that rotates down over the outer edge of the stored optical disc when the cover 102 is in a closed configuration (FIG. 1). Likewise, the front cover has a bracket 116 of L-shaped cross section that locks over the opposite outer edge of the stored optical disc when the front cover 102 is closed. Inner upper and lower guide walls 117U and 117L, respectively, on the inside front cover 102 have two functions: firstly, to guide the placement of the booklet (not shown) that will be installed within the case beneath clips 118U and 118L so that it does not encroach on the transparent title band 203 at the top of the case 100 and, secondly, to make it more difficult to shake a optical disc, even if it has been released from the disk mounting hub 111, out of the top or bottom ends of the case that have been partially opened by bowing the front and back covers 102 and 104, respectively, of the case 100. The guide walls 117U and 117L make it necessary to bow the case considerably more than would be with a case without such guide walls. The case 100 also incorporates a pair of projections 119U and 119L, which extend vertically from the rear cover vertical near the closure edge. These projections 119U and 119L make it difficult to slide a optical disc out of the closure side of the case when it is opened just a crack. As an additional security feature, the case can be equipped with at least one, preferably two, security latches 120U and 120L that lock the front cover 102 and back cover 104 together along their closure edges 121 and 122, respectively, and can be taped over to slow down shoplifters, thereby making it more difficult to open the case, especially when wrapped in a heat-sealed sheet of transparent display wrap. The security latches 120U and 120L do not detract from the aesthetic quality of the case, as they conform to the shape of the case 100 when closed and locked.

Referring now to FIGs. 3 and 4, they are close-up views of open upper security latch 120U and shows how it is connected to the back cover 104 via a third live hinge 123. The lower security latch 120L is identical to the upper latch 120U.

Referring now to FIGs. 3, 5 and 6, it will be noted that each security latch 120U or 120L has three extensions 301A, 301 B and 301C that mate with three apertures 501A, 501 B and 501 C, respectively, that are formed within an associated latch socket 124U or 124L in the front cover 102. FIG. 7 is a plan view of the top (or bottom) of the injection molded optical disc case in a fully closed and latched configuration. FIG. 8 is an elevational view of the spine of the injection molded optical disc case in a fully closed and latched configuration. FIG. 9 is an elevational view of the fully open injection molded optical disc case, as seen from the bottom edge thereof. FIG. 10 is a cross-sectional view of the fully open injection molded optical disc case, taken through section line 10 - 10 of FIG. 1.

As used in the description and the claims, the article "a" means one or more, unless it is defined otherwise.

While there have been described and pointed out fundamental novel features of the invention as applied to a preferred embodiment thereof, it will be understood that various omissions and substitutions and changes, in the form and details of the embodiments illustrated, may be made by those skilled in the art. The invention is not limited by the embodiments described above which are presented as examples only but can be modified in various ways within the scope of protection defined by the appended patent claims.

## Claims

1. A case (100) for storing an optical storage disc, being made by injection-molding as one-piece and comprising:
a spine (101);
a front cover (102) having a first upper edge, a first lower edge, a first side edge and a second side edge (121), said front cover (102) being coupled to said spine (101) via a first live hinge (103) along said first side edge:
a back cover (104) having a second upper edge, a second lower edge, a third side edge and a fourth side edge (122), said back cover (104) being coupled to said spine (101) via a second live hinge (105) along said third side edge;
a sleeve (201) surrounding and covering major portions of the spine (101), the front cover (102) and the back cover (104) and wherein a title and credits page is insertable in the sleeve (201); and
clips (118U, 118L) integral with an Inner surface of the front cover (102) so that a booklet is installable beneath the clips (118U, 118L),
**characterized in that**
a disc mounting structure (111, 112) is positioned on an inner surface of said back cover (104), the disc mounting structure (111, 112) being positioned closer to said second lower edge than to said second upper edge;
and **in that** the sleeve (201) is set back from the first and second upper edges (202) of the front and back covers (102, 104) by an amount sufficient to leave a title band (203) on an upper portion of the case (100) for showing a symbol or text,
wherein the positioning of the disc mounting structure (111, 112) on the Inner surface of the back cover (104) closer to said second lower edge than to said second upper edge provides a mounting space (113) on the inner surface of the back cover (104) for mounting an EAS tag (114), where the mounting space (113) is located above the disc mounting structure (111, 112) and a distance below the second upper edge of the back cover (104) is greater than the setback of the sleeve (201) from the second upper edge of the back cover (104); and the mounting space does not encroach into the title band (203);
and **In that** the Inner surface of the front cover (102) includes upper and lower guide walls (117U, 117L) to guide placement of the booklet beneath the clips (118U, 118L) so that the booklet does not encroach into the title band (203), and **In that** the title band (203) is transparent.

2. The case (100) according to claim 1, wherein the set back of the sleeve (201) from said upper edges (202) of said front cover (102) and back cover (104) is within a range of between 0.8 to 2.5 centimeters.

3. The case (100) according to claim 2, wherein said sleeve (201) is transparent

4. The case (100) according to claim 1, wherein said first live hinge (103) is positioned at about a first quarter of a spine rimwall (108), and that said second live hinge (105) is positioned at about a third quarter of said spine rlmwall (108), said front cover (102) incorporates about one-fourth of said spine rimwall (108), said back cover (104) incorporates about one-fourth of said spine rimwall (108), and said spine (101) accounts about one-half of said spine rimwall (108).

5. The case (100) according to claim 1, comprising a projection extends outwardly from an inner surface of said front cover (102) adjacent said second side edge (121); and that said projection hampers removal of a stored disc through a slit formed between said second side edge (121) and said fourth side edge (122) when the case (100) is in a partially open state.

6. The case (100) according to claim 1, comprising a tab (115) integral with said spine (101) rotates down over an outer edge of an optical storage disc stored on the disc mounting structure (111, 112) when the case (100) is in a closed configuration.

7. The case (100) according to claim 1, comprising at least one security latch (120U, 120L) is provided to lock said front cover (102) to said back cover (104) at a location proximal to said second side edge.

8. The case (100) according to claim 1, wherein the upper and lower guide walls (117U, 117L) create a barrier hampering the removal of a stored disc through a slit formed between the first and second upper edges or the first and second lower edges due to the bowing of the front and back covers (102, 104) of the case (100).

9. The case (100) according to claim 1, so that in a closed configuration the case (100) has an upper rimwall (106), a spine rimwall (108), a lower rimwall (107) and a closure rimwall (109); and at least three of said rimwalls (106, 107, 108, 109) are generally semi-cylindrical.

10. The case (100) according to claim 9, wherein the generally semi-cylindrical rimwalls (106, 107, 108, 109) include a rounded portion and a flattened portion and the rounded portion is equal to or larger than the flattened portion.

11. The case (100) according to claim 9, wherein said spine (101) has upper and lower end portions which fit into corresponding cutouts in said upper and lower rimwalls (106, 107), respectively.

## Patentansprüche

1. Behältnis (100) zum Aufbewahren einer optischen Speicherplatte, das einstückig durch Spritzgießen hergestellt ist und Folgendes umfasst:
einen Rücken (101);
einen vorderen Deckel (102) mit einer ersten Oberkante, einer ersten Unterkante, einer ersten Seitenkante und einer zweiten Seitenkante (121), wobei der vordere Deckel (102) über ein erstes Filmscharnier (103) entlang der ersten Seitenkante mit dem Rücken (101) verbunden ist;
einen hinteren Deckel (104) mit einer zweiten Oberkante, einer zweiten Unterkante, einer dritten Seitenkante und einer vierten Seitenkante (122), wobei der hintere Deckel (104) über ein zweites Filmscharnier (105) entlang der dritten Seitenkante mit dem Rücken (101) verbunden ist;
eine Hülle (201), die größere Abschnitte des Rückens (101), des vorderen Deckels (102) und des hinteren Deckels (104) umgibt und bedeckt, und wobei eine Titel- und Verzeichnisseite in die Hülle (201) einfügbar ist; und
Clips (118U, 118L), die mit einer Innenfläche des vorderen Deckels (102) einstückig sind, sodass ein Booklet unter den Clips (118U, 118L) einfügbar ist,
**dadurch gekennzeichnet, dass**
eine Plattenanbringungsstruktur (111, 112) auf einer Innenfläche des hinteren Deckels (104) angeordnet ist, wobei die Plattenanbringungsstruktur (111, 112) näher an der zweiten Unterkante als an der zweiten Oberkante angeordnet ist;
und dass die Hülle (201) von der ersten und zweiten Oberkante (202) des vorderen und hinteren Deckels (102, 104) um einen Betrag zurückgesetzt ist, der genügt, um einen Titelstreifen (203) auf einem oberen Abschnitt des Behältnisses (100) zum Aufweisen eines Symbols oder Texts zu belassen,
wobei die Anordnung der Plattenanbringungsstruktur (111, 112) auf der Innenfläche des hinteren Deckels (104) näher an der zweiten Unterkante als an der zweiten Oberkante einen Anbringungsraum (113) auf der Innenfläche des hinteren Deckels (104) zum Anbringen eines EAS-Etiketts (114) bereitstellt, wobei sich der Anbringungsraum (113) über der Plattenanbringungsstruktur (111, 112) befindet und ein Abstand unter der zweiten Oberkante des hinteren Deckels (104) größer als die Zurücksetzung der Hülle (201) von der zweiten Oberkante des hinteren Deckels (104) ist, und der Anbringungsraum nicht in den Titelstreifen (203) eindringt;
und dass die Innenfläche des vorderen Deckels (102) obere und untere Führungswände (117U, 117L) zum Führen der Anordnung des Booklets unter den Clips (118U, 118L) aufweist, sodass das Booklet nicht in den Titelstreifen (203) eindringt, und dass der Titelstreifen (203) transparent ist.

2. Behältnis (100) nach Anspruch 1, wobei sich die Zurücksetzung der Hülle (201) von den Oberkanten (202) des vorderen Deckels (102) und des hinteren Deckels (104) innerhalb eines Bereichs von 0,8 bis 2,5 Zentimetern befindet.

3. Behältnis (100) nach Anspruch 2, wobei die Hülle (201) transparent ist.

4. Behältnis (100) nach Anspruch 1, wobei das erste Filmscharnier (103) an ungefähr einem ersten Viertel einer Rückenrandwand (108) angeordnet ist und das zweite Filmscharnier (105) an ungefähr einem dritten Viertel der Rückenrandwand (108) angeordnet ist, wobei der vordere Deckel (102) ungefähr ein Viertel der Rückenrandwand (108) eingliedert, der hintere Deckel (104) ungefähr ein Viertel der Rückenrandwand (108) eingliedert und der Rücken (101) ungefähr eine Hälfte der Rückenrandwand (108) ausmacht.

5. Behältnis (100) nach Anspruch 1, umfassend einen Vorsprung, der von einer Innenfläche des vorderen Deckels (102) der zweiten Seitenkante (121) benachbart nach außen verläuft; und wobei
der Vorsprung die Entnahme einer aufbewahrten Platte durch einen Schlitz, der zwischen der zweiten Seitenkante (121) und der vierten Seitenkante (122) ausgebildet ist, behindert, wenn das Behältnis (100) in einem teilweise offenen Zustand ist.

6. Behältnis (100) nach Anspruch 1, umfassend eine Zunge (115), die mit dem Rücken (101) einstückig ist und nach unten über eine Außenkante einer optischen Speicherplatte dreht, die auf der Plattenanbringungsstruktur (111, 112) aufbewahrt ist, wenn das Behältnis (100) in einer geschlossenen Konfiguration ist.

7. Behältnis (100) nach Anspruch 1, umfassend mindestens einen Sicherheitsverschluss (120U, 120L), der zum Verschließen des vorderen Deckels (102) mit dem hinteren Deckel (104) an einer Stelle vorgesehen ist, die sich in der Nähe der zweiten Seitenkante befindet.

8. Behältnis (100) nach Anspruch 1, wobei die oberen und unteren Führungswände (117U, 117L) eine Barriere schaffen, die die Entnahme einer aufbewahrten Platte durch einen Schlitz, der zwischen der ersten und zweiten Oberkante oder der ersten und zweiten Unterkante aufgrund der Durchbiegung des vorderen Deckels und hinteren Deckels (102, 104) des Behältnisses (100) ausgebildet ist, behindert.

9. Behältnis (100) nach Anspruch 1, sodass das Behältnis (100) in einer geschlossenen Konfiguration eine obere Randwand (106), eine Rückenrandwand (108), eine untere Randwand (107) und eine Verschlussrandwand (109) aufweist; und
zumindest drei der Randwände (106, 107, 108, 109) im Allgemeinen halbzylindrisch sind.

10. Behältnis (100) nach Anspruch 9, wobei die im Allgemeinen halbzylindrischen Randwände (106, 107, 108, 109) einen abgerundeten Abschnitt und einen abgeflachten Abschnitt beinhalten und der abgerundete Abschnitt gleich dem oder größer als der abgeflachte Abschnitt ist.

11. Behältnis (100) nach Anspruch 9, wobei der Rücken (101) obere und untere Endabschnitte aufweist, die in entsprechende Ausschnitte in den oberen bzw. unteren Randwänden (106, 107) passen.

## Revendications

1. Boîtier (100) destiné à loger un disque optique de stockage, qui est réalisé par moulage par injection en une seule pièce et comprenant :
un dos (101),
un capot avant (102) comportant un premier bord supérieur, un premier bord inférieur, un premier bord latéral et un deuxième bord latéral (121), ledit capot avant (102) étant relié audit dos (101) par l'intermédiaire d'une première charnière-film (103) le long dudit premier bord latéral,
un capot arrière (104) comportant un deuxième bord supérieur, un deuxième bord inférieur, un troisième bord latéral et un quatrième bord latéral (122), ledit capot arrière (104) étant relié audit dos (101) par l'intermédiaire d'une deuxième charnière-film (105) le long dudit troisième bord latéral,
une chemise (201) entourant et recouvrant des parties principales du dos (101), du capot avant (102) et du capot arrière (104) et où une page de titres et de mentions peut être insérée dans là chemise (201), et
des attaches (118U, 118L) solidaires d'une surface intérieure du capot avant (102) de sorte qu'un livret peut être installé en dessous des attaches (118U, 118L),
**caractérisé en ce que**
une structure de réception de disque (111, 112) est positionnée sur une surface intérieure dudit capot arrière (104), la structure de réception de disque (111, 112) étant positionnée plus près dudit deuxième bord inférieur que dudit deuxième bord supérieur,
et **en ce que** la chemise (201) est en retrait par rapport aux premier et deuxième bords supérieurs (202) des capots avant et arrière (102, 104) d'une valeur suffisante pour laisser une bande de titre (203) sur une partie supérieure du boîtier (100) en vue de représenter un symbole ou un texte,
dans lequel le positionnement de la structure de réception de disque (111, 112) sur la surface intérieure du capot arrière (104) plus proche dudit deuxième bord inférieur que dudit deuxième bord supérieur fournit un espace de réception (113) sur la surface intérieure du capot arrière (104) en vue de recevoir une étiquette EAS, où l'espace de réception (113) est situé au-dessus de la structure de réception de disque (111, 112) et une distance en dessous du deuxième bord supérieur du capot arrière (104) est plus importante que le retrait de la chemise (201) par rapport au deuxième bord supérieur du capot arrière (104), et l'espace de réception n'empiète pas dans la bande de titre (203),
et **en ce que** la surface intérieure du capot avant (102) comprend des parois de guidage supérieure et inférieure (117U, 117L) pour guider le positionnement du livret en dessous des attaches (118U, 118L) de sorte que le livret n'empiète pas dans la bande de titre (203), et **en ce que** la bande de titre (203) est transparente.

2. Boîtier (100) selon la revendication 1, dans lequel le retrait de la chemise (201) par rapport auxdits bords supérieurs (202) dudit capot avant (102) et dudit capot arrière (104) se trouve dans une plage de 0,8 à 2,5 centimètres.

3. Boîtier (100) selon la revendication 2, dans lequel ladite chemise (201) est transparente.

4. Boîtier (100) selon la revendication 1, dans lequel ladite première charnière-film (103) est positionnée au niveau environ d'un premier quart d'une paroi de rebord de dos (108), et ladite deuxième charnière-film (105) est positionnée au niveau environ d'un troisième quart de ladite paroi de rebord de dos (108), ledit capot avant (102) incorpore environ un quart de ladite paroi de rebord de dos (108), ledit capot arrière (104) incorpore environ un quart de ladite paroi de rebord de dos (108), et ledit dos (101) compte environ une moitié de ladite paroi de rebord de dos (108).

5. Boîtier (100) selon la revendication 1, comprenant une protubérance qui s'étend vers l'extérieur depuis une surface intérieure dudit capot avant (102) de façon adjacente audit deuxième bord latéral (121), et
ladite protubérance empêche le retrait d'un disque rangé à travers une fente formée entre ledit deuxième bord latéral (121) et ledit quatrième bord latéral (122) lorsque le boîtier (100) se trouve dans un état partiellement ouvert.

6. Boîtier (100) selon la revendication 1, comprenant une patte (115) solidaire dudit dos (101) qui tourne vers le bas au-dessus d'un bord extérieur d'un disque optique de stockage rangé sur la structure de réception de disque (111, 112) lorsque le boîtier (100) se trouve dans une configuration fermée.

7. Boîtier (100) selon la revendication 1, comprenant au moins un élément de verrouillage de sécurité (120U, 120L) qui est prévu pour verrouiller ledit capot avant (102) audit capot arrière (104) à un endroit proche dudit deuxième bord latéral.

8. Boîtier (100) selon la revendication 1, dans lequel les parois de guidage supérieure et inférieure (117U, 117L) créent une barrière empêchant le retrait d'un disque rangé à travers une fente formée entre les premier et deuxième bords supérieurs ou les premier et deuxième bords inférieurs en raison du courbage des capots avant et arrière (102, 104) du boîtier (100).

9. Boîtier (100) selon la revendication 1, de sorte que dans une configuration fermée, le boîtier (100) comporte une paroi de rebord supérieure (106), une paroi de rebord de dos (108), une paroi de rebord inférieure (107) et une paroi de rebord de fermeture (109), et
au moins trois desdites parois de rebords (106, 107, 108, 109) sont globalement demi - cylindriques.

10. Boîtier (100) selon la revendication 9, dans lequel les parois de rebords globalement demi - cylindriques (106, 107, 108, 109) comprennent une partie arrondie et une partie aplatie et la partie arrondie est plus grande ou équivalente à la partie aplatie.

11. Boîtier (100) selon la revendication 9, dans lequel ledit dos (101) comporte des parties d'extrémité supérieure et inférieure qui s'adaptent dans des découpes dans lesdites parois de rebords supérieure et inférieure (106, 107), respectivement.
